# EUROPEAN PATENT SPECIFICATION

(11) **EP 2 026 923 B1**
(45) Date of publication and mention of the grant of the patent: **14.03.2012**
(21) Application number: 07741560.2
(22) Date of filing: 06.04.2007
(51) Int. Cl.: B22F 1/00, B22F 9/04, H01F 41/02, C22C 38/00

(54) **APPARATUS FOR PRODUCING ALLOY AND RARE EARTH ELEMENT ALLOY**
VORRICHTUNG ZUR HERSTELLUNG EINER LEGIERUNG UND SELTENERDELEMENTLEGIERUNG
APPAREIL POUR PRODUIRE UN ALLIAGE ET UN ALLIAGE D'ELEMENT DE TERRE RARE

(30) Priority: 07.04.2006 JP 2006106793; 18.04.2006 US 792647 P
(43) Date of publication of application: 25.02.2009
(73) Proprietor: Showa Denko K.K., Tokyo 105-8518 (JP)
(72) Inventor: HASEGAWA, Hiroshi, Chichibu-shi Saitama 369-1893 (JP); UENO, Kazuya, Chichibu-shi Saitama 369-1893 (JP); OSAWA, Shinichi, Chichibu-shi Saitama 369-1893 (JP); SASAKI, Shiro, Chichibu-shi Saitama 369-1893 (JP)
(74) Representative: Strehl Schübel-Hopf & Partner
(86) International application number: PCT/JP2007/058124
(87) International publication number: WO 2007/117037

(56) References cited:
- JP-A- 8 264 363
- JP-A- 10 036 949
- JP-A- 11 213 463
- JP-A- 63 047 301
- JP-A- 2000 225 460
- JP-A- 2001 250 990
- JP-A- 2002 266 006
- JP-A- 2003 188 006
- US-A1- 2005 028 892

## Description

### TECHNICAL FIELD

The present invention relates to an apparatus for producing an alloy. In particular, the present invention relates to an apparatus for producing a rare earth element-containing alloy that includes an R-T-B type alloy (wherein R is at least one or more elements of rare earth elements including Y, T is a metal which always includes Fe, and B is boron).

This application claims the priority of Japanese Patent Application No. 2006-106793, filed April 7, 2006, and the priority benefit of U.S. Provisional Application No. 60/792,647, filed on April 18, 2006, the contents of which are incorporated herein by reference.

### BACKGROUND ART

R-T-B type magnets, which have the highest magnetic energy product among permanent magnets, have been applied to hard disks (HD), MRIs (magnetic resonance imaging), various types of motors and the like due to their excellent properties. In recent years, their application for motors used in cars has been increased because energy saving is highly expected and the heat-resistance of the R-T-B type magnets has been improved.

The R-T-B type magnets mainly contain Nd, Fe, and B, and therefore, they are generally called an "Nd-Fe-B type" or "R-T-B type" magnet. The R of the R-T-B type magnet represents mainly those in which a part of Nd is substituted with other rare earth elements such as Pr, Dy, and Tb, namely at least one of these rare earth elements including Y. T represents those in which a part of Fe is substituted with metals such as Co and Ni. B represents Boron in which a part of Boron can be substituted with C or N. In addition, Cu, Al, Ti, V, Cr, Ga, Mn, Nb, Ta, Mo, W, Ca, Sn, Zr, Hf, etc. may be added singularly or in combination as additional elements in the R-T-B type magnet.

An R-T-B type alloy, which turns into the R-T-B type magnet, is an alloy which has a main phase of R₂T₁₄B, namely a ferromagnetic phase that contributes to magnetization, and which simultaneously has non-magnetic R-rich phase having a low melting temperature in which the rare-earth elements are concentrated, and the R-T-B type alloy is an active metal. Therefore, the R-T-B type alloy has been molten or cast generally in a vacuum or an inert gas. Also, in order to produce a sintered magnet from a block of the cast R-T-B type alloy by way of the powdered metal technique, the block of the alloy is crushed into alloy powder of about 3 µm (measured using a Fisher Sub-Sieve Sizer (FSSS)), then pressed in a magnetic field, and sintered at a high temperature of about 1000°C to 1100°C in a sintering furnace. Then, the sintered alloy is generally subjected to the heating treatment, mechanical processing, and further plated to improve the erosion resistance, thereby forming a sintered magnet.

The R-rich phase of the R-T-B type sintered magnet has the following important roles:
1) The R-rich phase has a low melting temperature, becomes a liquid phase when sintered, and contributes to the densification of the magnet, namely the improvement of the magnetization;
2) The R-rich phase eliminates irregularities of the grain boundary, reduces nucleation sites in the reverse magnetic domain, and enhances the coercive force; and
3) The magnetic R-rich phase magnetically insulates the main phase, and increases the coercive force.

Consequently, if the state of the dispersion of the R-rich phases in the shaped magnet is inferior, this causes partial sintering-deficiency and low magnetization, and it is therefore important that the R-rich phases are uniformly dispersed in the shaped magnet. The distribution of the R-rich phases is considerably affected by the organization of the material, namely R-T-B type alloy.

Another problem rises in the casting of the R-T-B type alloy, in which α-Fe generates in the cast alloy. α-Fe has deformability, and therefore, is not crushed and remains in the crusher. This not only decreases the crushing efficiency of the alloy but also affects compositional alteration and the particle size distribution before and after crushing. Moreover, if α-Fe remains in the magnet even after sintering, then the magnetic property of the magnet will deteriorate. Therefore, it has been considered that α-Fe should be excluded from the material alloy as much as possible. This is why α-Fe has been eliminated in conventional alloys by subjecting them to homogenizing treatment conducted at a high temperature for an extended time where necessary. A small amount of α-Fe present in the material alloy can be eliminated by way of the homogenizing treatment. However, the elimination requires the solid phase dispersion at an extended period because α-Fe is present as peritectic nuclei. Consequently, the elimination of α-Fe is actually extremely difficult when the ingots have a thickness of several centimeters and the amount of the rare earth elements is 33% or less.

The strip cast method (abbreviated as "SC method") has been developed and applied to practical processes, in which a block of the alloy is cast at a more rapid cooling rate in order to solve the problem in which α-Fe generates in the R-T-B type alloy.

The SC method is a technique in which a thin lamina of about 0.1mm to 1 mm is cast by pouring the molten alloy onto a copper roller whose inside is water-cooled, and the alloy is quenched and solidified. In the SC method, because the molten alloy is extensively cooled to the temperature at which an R₂T₁₄B phase (main phase) generates, or below this temperature, the R₂T₁₄B phase can be generated directly from the molten alloy and the deposition of α-Fe can be controlled. Furthermore, the crystalline organization of the alloy becomes refined by way of the SC method, and therefore, an alloy that has an organization where the R-rich phases are finely dispersed can be produced. The R-rich phase reacts with hydrogen in a hydrogen atmosphere, expands and becomes a fragile hydride. By applying this property, fine cracks are incorporated therein, matching the degree of the dispersion of the R-rich phases. When the alloy is finely crushed after such a hydrogenation process, a large number of the fine cracks generated by way of the hydrogenation causes the alloy to break, and the crushability is very excellent. Thus, as a thin lamina of the alloy cast by way of the SC method has internal R-rich phases finely dispersed therein, the dispersibility of the R-rich phases in the crushed and sintered magnet is also excellent, thereby successfully improving the magnetic property of the magnet (for example, patent document 1).

In addition, the thin lamina of the alloy cast by way of the SC method has excellent homogeneity of the organization. The homogeneity of the organization can be compared with respect to particle diameters of the crystals or the state of the dispersion of the Rich-phases. In the thin lamina of the alloy produced by way of the SC method, although chill crystals sometimes generate on the side of the thin lamina adjacent to the casting roller (hereinafter, referred as the "casting-roller side"), a properly refined and homogeneous organization on the whole, which resulted from the rapid-cooling and solidification, can be obtained.

As explained above, when the R-T-B type alloy cast by way of the SC method is applied to the production of a sintered magnet, the homogeneity of the R-rich phases in the produced magnet is enhanced, and the harmful effects to the crushing process and the magnetization owing to α-Fe can also be prevented. Thus, the block of the R-T-B type alloy cast by way of the SC method has an excellent organization for producing a sintered magnet. However, as the properties of the magnet improve, further improvement of the R-T-B type alloy has been sought

Patent Document 1: Japanese Unexamined Patent Application, Publication No. H5-222488

US 2005/028892 A1 discloses a casting apparatus for producing R-T-B alloy for a rare earth magnet through the strip casting method which includes a container for collecting crushed pieces of a strip.

### DISCLOSURE OF INVENTION

As described above, the R-T-B type alloy is an alloy that mainly includes an element "R" in which a part ofNd is substituted with the other rare earth elements such as Pr, Dy and Tb; an element "T" in which a part of Fe is substituted with metals such as Co and Ni; and "B" (boron). In general, the heat-resistance of the R-T-B type magnet is evaluated on the basis of the magnitude of its coercive force. The coercive force increases as the compositional ratios of Dy and Tb in the R-T-B type alloy increase. However, Dy and Tb are very expensive metals. Therefore, there has been a problem in which the addition ofDy and Tb to produce an R-T-B type magnet is too costly.

Furthermore, the addition of Dy and Tb indeed improves the coercive force, but tends to decline the remanent magnetic flux density. This undesirably results in the decline of the hard magnetic characteristics.

The present invention was accomplished to solve the above problems. The object of the present invention is to provide an apparatus for producing a rare earth element-containing alloy, which makes it possible to produce a rare earth magnet that has a high coercive force.

In order to solve the above-described object, the present invention adopts the following:
[1] An apparatus for producing an alloy, including: a casting device which casts a molten alloy using the strip cast method; a crushing device which crushes the cast alloy after casting; and a heating device which keeps the thin laminas of the cast alloy after crushing at a predetermined temperature or which heats the thin laminas of the cast alloy, wherein the heating device is equipped with a container and a heater, the container is equipped with a storage container, and an opening-closing stage disposed over the storage conmbe4 the thin laminas of the cast alloy supplied from the crushing device are mounted on the opening-closing stage when the opening-closing stage is in a closed state; and the opening-closing stage releases the thin lamina of the cast alloy to the storage container when the opening-closing stage is in an opened state.
[2] The apparatus for producing an alloy according to [1], wherein a hopper and the heating device are disposed below the crushing device.
[3] The apparatus for producing an alloy according to [2], wherein the heater has an opening part, and an outlet of the hopper is disposed in the opening part.
[4] The apparatus for producing an alloy according to [1], wherein the opening-closing stage releases the thin laminas of the cast alloy to the storage container after a predetermined period from the time when the thin laminas of the cast alloy are mounted on the opening-closing stage.
[5] The apparatus for producing an alloy according to any one of [1] to [4], wherein the heater keeps the thin laminas of the cast alloy mounted on the opening-closing stage at a predetermined temperature, or the heater heats the thin laminas of the cast alloy mounted on the opening-closing stage.
[6] The apparatus for producing an alloy according to any one of [1] to [5], further including a driving device which enables the container to move freely.
[7] The apparatus for producing an alloy according, to [6], wherein the container is equipped with a plurality of the opening-closing stages, and the plurality of the opening-closing stages is disposed along the moving direction of the container.
[8] The apparatus for producing an alloy according to [7], wherein the thin laminas of the cast alloy are sequentially mounted on each opening-closing stage by moving the container in accordance with preparation of the thin laminas of the cast alloy.
[9] The apparatus for producing an alloy according to [7] or [8], wherein the opening-closing stages sequentially release the thin laminas of the cast alloy to the storage container after a predetermined period from the time when the thin laminas of the cast alloy are mounted on the opening-closing stages.
[10] The apparatus for producing an alloy according to any one of [1] to [9], wherein the opening-closing stage includes a stage plate, and an opening-closing system which opens and closes the stage plate while the opening-closing system controls the inclining angle of the stage plate; the opening-closing system mounts the thin laminas of the cast alloy on the stage plate by adjusting the stage plate at a horizontal position or a inclining position when the opening-closing stage is in a close state; and the opening-closing system releases the thin laminas of the cast alloy to the storage container by making the inclining angle of the stage plate larger when the opening-closing stage is in an open state.
[11] The apparatus for producing an alloy according to any one of [1] to [10], wherein the casting device, the crushing device and the heater are disposed inside a chamber of an inert gas atmosphere.
[12] The apparatus for producing an alloy according to any one of [1] to [16], wherein the alloy is a rare earth element-containing alloy comprising an R-T-B type alloy where R is at least one element of rare earth elements including Y; T is a metal which indispensably contains Fe; and B is boron.

As described above, according to the apparatus for producing an alloy of the present invention, the thin laminas of the cast alloy after casting and crushing are subjected to the temperature-keeping treatment or the heating treatment, so that the properties of the alloy can be improved.

In particular, when the produced alloy is an R-T-B type alloy, its coercive force can be improved by way of the temperature-keeping treatment, and a rare earth magnet having excellent coercive force can be produced.

### BRIEF DESCRIPTION OF THE DRAWINGS

FIG. 1 is a front view showing one embodiment of the apparatus for producing an alloy in the present invention;
FIG. 2 is a front view showing a casting device which is provided in the apparatus for producing an alloy;
FIG. 3 is a front view showing a heating device which is provided in the apparatus for producing an alloy;
FIG. 4 is a side view showing a heating device which is provided in the apparatus for producing an alloy;
FIG. 5 is a plan view showing opening-closing stages and a container which are provided in the apparatus for producing an alloy;
FIG. 6 is a front view illustrating the operation of the apparatus for producing an alloy;
FIG 7 is a front view illustrating the operation of the apparatus for producing an alloy;
FIG 8 is a front view illustrating the operation of the apparatus for producing an alloy;
FIG 9 is a front view illustrating the operation of the apparatus for producing an alloy;
FIG. 10 is side view illustrating the operation of the apparatus for producing an alloy;
FIG 11 is a front view showing another example of the heating device which is provided in the apparatus for producing an alloy;
FIG 12 is a front view showing another example of the heating device which is provided in the apparatus for producing an alloy;
FIG 13 is a front view showing another example of the heating device which is provided in the apparatus for producing an alloy;
FIG 14 is a front view showing another example of the heating device which is provided in the apparatus for producing an alloy;
FIG 15 is a front view showing another example of the heating device which is provided in the apparatus for producing an alloy;
FIG 16 is a front view showing another embodiment of the apparatus for producing an alloy;
FIG. 17 is a view showing another example of the opening-closing stage; and
FIG 18 is a graph describing the relationship between the keeping temperature and the coercive force of the R-T-B type magnets produced in Examples 1 to 3 and Comparative Example 1.

### BEST MODE FOR CARRYING OUT THE INVENTION

Hereinafter, one preferred embodiment of the apparatus for producing an alloy of the present invention is explained by referring to the figures. However, it should be understood that the figures are used only for describing the configuration of the apparatus, and the shown size, width, scales, etc. of each device does not always reflects those of the actual apparatus for producing an alloy.

### [Format of the apparatus for producing an alloy]

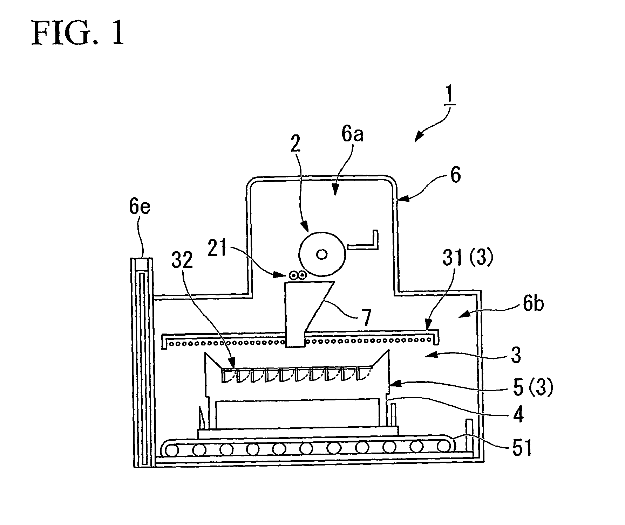

FIG. 1 is a front view showing a general configuration of the apparatus for producing an alloy as one embodiment.

An apparatus for producing an alloy 1 shown in FIG 1 (hereinafter, shown as "production apparatus 1") is equipped with a casting device 2, a crushing device 21, and a heating device 3 in general. The heating device 3 includes a heater 31 and a container 5. The container 5 includes a storage container 4, and the opening-closing stage group 32 provided over the storage container 4. In this configuration, the container 5 (storage container 4) is disposed below the heating device 3. Also, the production apparatus 1 is equipped with a belt conveyor 51 (driving device) which freely actuates the container 5, and the container 5 can move to either the right or the left hand driven by the belt conveyor 51.

Also, the production apparatus 1 shown in FIG. 1 is equipped with a chamber 6. The chamber 6 includes a casting chamber 6a and a temperature-keeping storage chamber 6b which is provided below the casting chamber 6a, and which is connected to the casting chamber 6a. The casting device 2 is installed in the casting chamber 6a, and the heating device 3 is installed in the temperature-keeping storage chamber 6b. In this way, the casting device 2 and the heating device 3 are installed inside the chamber 6. In addition, the heating device 3 is disposed below the casting device 2 in this configuration.

A gate 6e is provided in the temperature-keeping storage chamber 6b, and the temperature-keeping storage chamber 6b is closed with the gate 6e except that the container 5 is conveyed outside the temperature-keeping storage chamber 6b.

The inside of the chamber 6 is in the state of reduced pressure of an inert gas, and examples of the inert gas include argon.

In addition, a cooling chamber may be provided on the side of the temperature-keeping storage chamber 6b across the gate 6e. Also, the cooling chamber may be equipped with another gate, and the container 5 may be designed to move outside the chamber 6 while leaving this gate open.

The casting device 2 is also equipped with the crushing device 21 that crushes blocks of the cast alloy formed by way of casting into thin laminas of the cast alloy. Moreover, a hopper 7 is provided between the casting device 2 and the opening-closing stage group 32. The hopper 7 directs the thin laminas of the cast alloy onto the opening-closing stage group 32.

Hereinafter, each of the devices included in the production apparatus 1 is further described in detail.

### [Structure of the casting device]

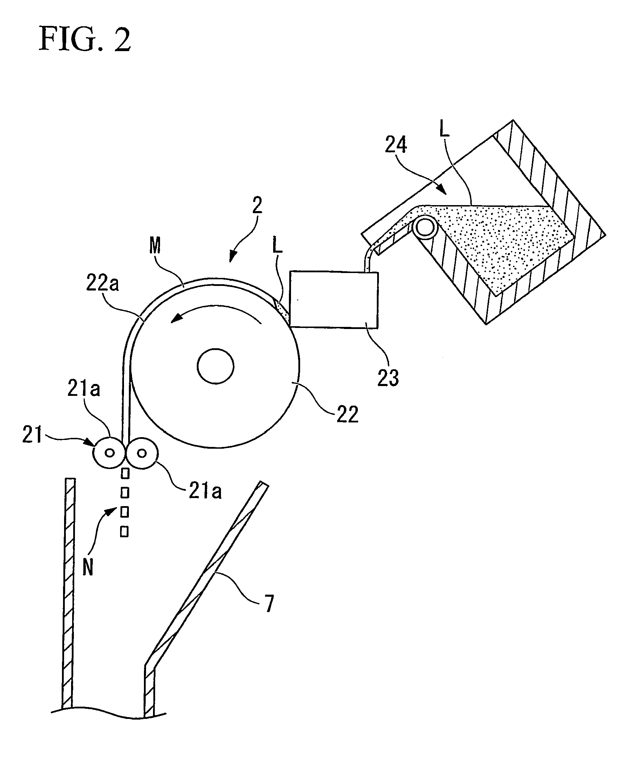

FIG. 2 is a front view showing the casting device 2 that is provided in the production apparatus 1.

As shown in FIG. 2, the casting device 2 according to the present embodiment is a device which prepares thin laminas of the cast alloy by way of crushing after casting the molten alloy using the strip cast method. In general, the casting device 2 includes a cooling roll 22 having a diameter of about 60 mm to 80 mm that casts a molten alloy L into a cast alloy M by way of rapid cooling the molten alloy; a tundish 23 that supplies the cooling roll 22 with the molten alloy L; and crushing device 21 that crushes the cast alloy M cast by the cooling roll 22 into thin laminas N of the cast alloy.

The molted alloy L is prepared in a high-frequency melting furnace which is provided outside the chamber 6 (not shown in the figures). In the high-frequency melting furnace, materials are charged into a refractory pot in a vacuum or in an atmosphere of an inert gas, and the charged materials are molten by way of the high-frequency melting method, thereby preparing a molten alloy. The temperature of the molten alloy L varies with types of alloy contents, but it is adjusted within a range of 1300°C to 1500°C. As described in FIG. 2, the prepared molten alloy L is conveyed to the casting device 2 as it is kept in the refractory pot 24. Then, the molten alloy L is supplied to from the refractory pot 24 to the tundish 23.

The tundish 23 may be equipped with a flow-adjusting system and/or a slag-removing system where necessary. Also, the cooling roll 22 has a water-cooling system inside (not shown in the figures), and the circumferential surface 22a of the cooling roll 22 is cooled by the water-cooling system. With regard to the material for the cooling roll 22, a copper or copper alloy is suitable because they have excellent thermal conductivity, and are easily available. The supplying rate of the molten alloy L and the revolving speed of the cooling roll 22 are controlled according to the thickness of the cast alloy M, but it may be suitable that the revolving speed of the cooling roll 22 be about 0.5 to 3 m/s at a circumferential speed. Depending on the material for the cooling roll 22 or the condition of the circumferential surface 22a, metals often tend to adhere to the circumferential surface 22a of the cooling roll 22. Therefore, where necessary, a cleaning unit may be provided therein, so that the quality of the produced R-T-B type alloy will be stable. The cast alloy M solidified on the cooling roll 22 is separated from the cooling roll 22 at the side opposite to the tundish 23.

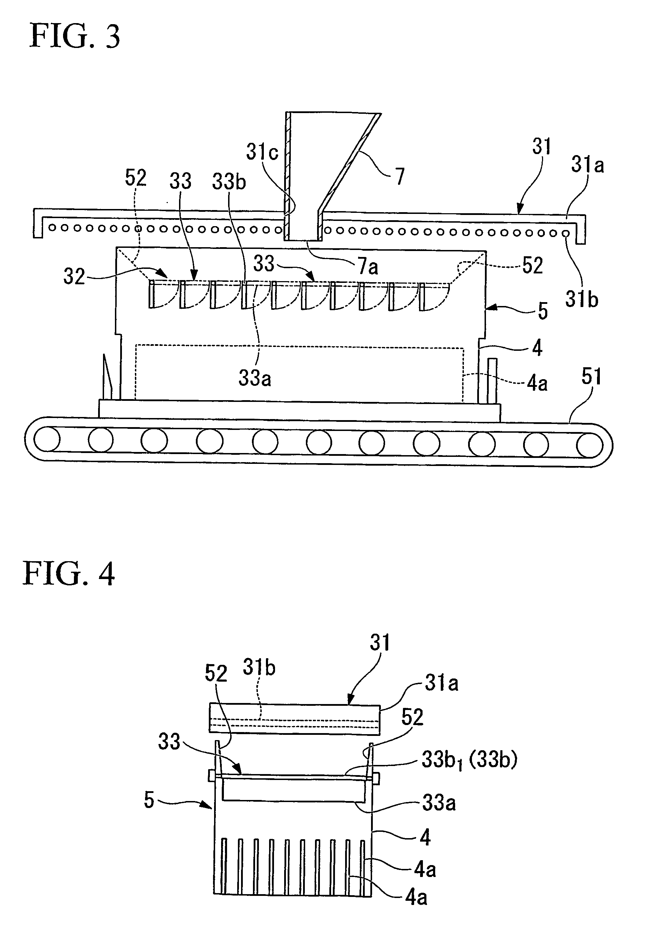

As shown in FIGS 2 and 3, the crushing device 21, for example, includes a pair of crushing rolls 21 a, and the cast alloy M is inserted between two rotating crushing rolls 21a, such that the cast alloy M is crushed into the thin laminas N of the cast alloy. The crushed thin laminas N of the cast alloy fall down through the hopper 7, and they are conveyed to the heating device 3.

### [Structure of the heating device]

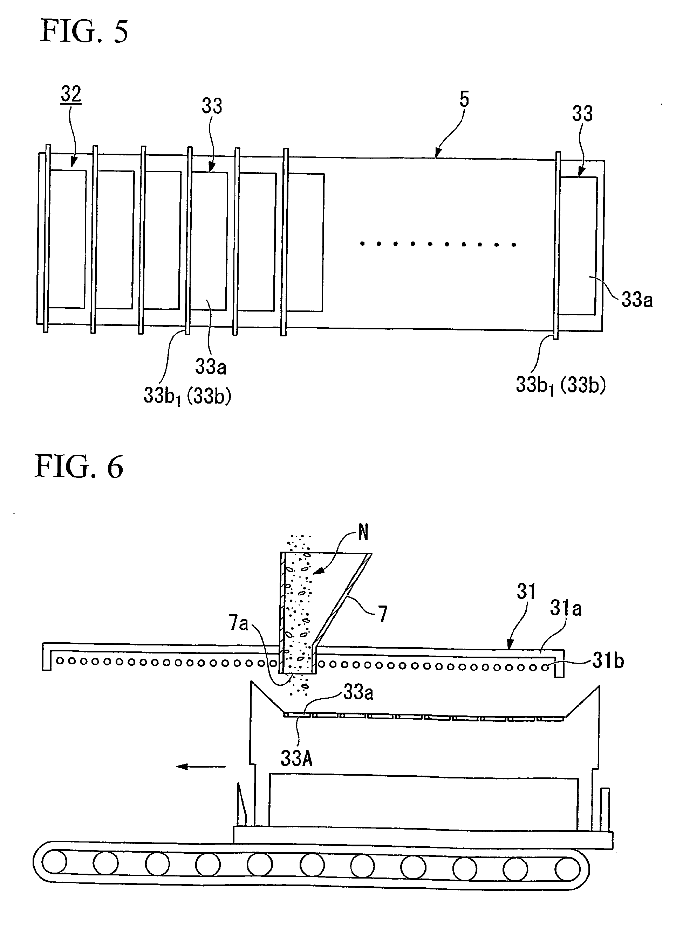

FIG 3 is a front view showing a heating device 3 which is provided in the apparatus for producing an alloy, FIG 4 is a side view thereof, and FIG 5 is a plan view thereof.

As shown in FIGS 3 to 5, a heater 31 included in the heating device 3 has a heater cover 31 a, and a main body 31 b attached blow the heater cover 31 a. The heater cover 31a is provided therein in order to release the heat generated from the main body 31 b to the direction of the container 5, and in order to prevent the heat from being released to the casting chamber 6a. Also, if the heater cover 31 a is provided therein, then it canl prevent the main body 31 from breaking down in the event of a portion of the molten alloy or the cast alloy unexpectedly falling down thereto.

With regard to its heating system, any one of the resistance heating, infrared heating, and induction heating can be adopted. Also, the main body 31b, for example, may be any heating element such as metal wires, silicon carbide, and graphite.

The heater 31 has an opening part 31c, and an outlet 7a of the hopper 7 is disposed in the opening part 31c. Consequently, the thin laminas N of the cast alloy that falls down from the casting device 2 and that passes through the hopper 7can be supplied to the opening-closing stage group 32 of the container 5 which is provided below the heater 31.

Moreover, the heater 31, as shown in FIGS 1 and 3, is disposed along the longitudinal direction of the belt conveyor 51 (the moving direction of the container 5) which is provided inside the temperature-keeping storage chamber 6b. This configuration makes it possible to uniformly keep the temperature of the thin laminas N of the cast alloy mounted on the opening-closing stage group 32 of the container 5 or to uniformly heat them even while the container 5 moves inside the temperature-keeping storage chamber 6b.

The opening-closing stage group 32 included in the heating device 3 is integrated with the storage container 4 to form the container 5. That is, the container 5 shown in FIGS 3 to 5 is formed with the storage container 4, and the opening-closing stage group 32 which is provided over the container 5

The opening-closing stage group 32 is equipped with a plurality of opening-closing stages 33. Each opening-closing stage 33 is disposed along the moving direction of the container 5. The opening-closing stage group 32 shown in FIGS 3 to 5 is equipped with ten opening-closing stages 33. Guide members 52 are provided around the opening-closing stage group 32, and the guide members 52 prevent the thin laminas N of the cast alloy that drop through the hopper 7 from scattering into the temperature-keeping storage chamber 6b.

Each opening-closing stage 33 leaves the thin laminas N of the cast alloy supplied from the casting device 2 mounted thereon to keep the temperature or to heat them with the heater 31 at a predetermined period, and drops the thin laminas N of the cast alloy to the storage container 4 after the temperature-keeping or heating period.

The opening-closing stage 33 is further explained in detail. Each opening-closing stage 33 is equipped with a stage plate 33a, and an opening-closing system 33b which opens or closes the stage plate 33a. Each opening-closing system 33b has a rotating shaft 33b₁ attached to one side of the stage plate 33a; and a driving unit (not shown in the figures), which rotates the rotating shaft 33b₁. Each driving unit can freely rotate the rotating shaft 33b₁, such that the inclining angle of each stage plate 33a can be controlled separately. The inclining angle of each stage plate 33a can be set anywhere in the range of 0° (where the stage plate 33a is horizontal (the position shown in FIG 3 with a dashed line)) to about 90° in the clockwise-direction (where the stage plate 33a is almost vertical (the position shown in FIG 3 with a continuous line)).

The opening-closing stage 33 is in a closed state when the stage plate 33a is in a horizontal position (when the inclining angle is about 0°) or when the stage plate 33a is inclined to such a degree that the thin laminas N of the cast alloy do not fall down from there. On the other hand, the opening-closing stage 33 is in an opened state from the condition in which the stage plate 33a, for example, is slightly inclining to the condition in which the stage plate 33a is vertical (when the inclining angle is about 90°s). When the opening-closing stage 33 is in the closed state, the thin laminas N of the cast alloy can be mounted on the stage plate 33a. When the opening-closing stage 33 is in an opened state, the stage plate 33a is in an inclined state, and the thin laminas N of the cast alloy can fall, thereby enabling them to fall into the storage container 4.

Thus, the opening-closing stage 33 can leave the thin laminas N of the cast alloy mounted on the stage plate 33a during a predetermined temperature-keeping period by actuating the opening-closing system 33b, and then, can drop the thin laminas N of the cast alloy down into the storage container 4 by making the inclining angle of the stage plate 33a larger.

In addition, the opening-closing stage 33 can function as a cover for the storage container 4. That is, the storage container 4 is closed when the opening-closing stages 33 are in a closed state. This prevents the heat of the heater 31 from transmitting to the storage container 4, thereby saving the inside of the storage container 4 from heating up. In this way, the opening-closing stages 33 can block the heat-transmission from the heater 31 whereby the thin laminas N of the cast alloy stored in the storage container 4 that were already subjected to the heat-keeping treatment are not subjected again to the temperature-keeping or heating, and the quality of the thin lamina N of the cast alloy is kept stable.

Next, a plurality of cooling plates 4a is provided inside the storage container 4 as shown in FIGS 3 and 4. The cooling plates 4a are arranged in their thickness direction at a fixed interval. When the thin laminas N of the cast alloy after the temperature-keeping are in contact with the cooling plates 4a, the accumulated heat in the thin laminas N of the cast alloy is absorbed into the cooling plates 4a, and the temperature of the thin lamina N of the cast alloy declines.

Various metals such as a stainless steal, iron, hastelloy, and inconel are applied to the materials for the opening-closing stage 33 and the storage container 4 as long as they can be used at a high temperature.

As shown in FIGS 3 and 4, the container 5 is mounted on the belt conveyor 51. The belt conveyor 51 enables the container 5 to move to the left or right side hand of FIG. 3.

### [The operation of the apparatus for producing an alloy]

Next, the operation of the above-described production apparatus 1 will be explained. All FIGS 6 to 9 are front views illustrating the operation of the apparatus for producing an alloy.

As shown in FIG. 6, the container 5 is moved to where an opening-closing stage 33A (present at the left edge of the opening-closing stage group 32) locates directly under the outlet 7a of the hopper 7. Also, all opening-closing stages 33 are set in a closed state.

Then, thin laminas N of the cast alloy are prepared by actuating the casting device 2. In reference to FIG 2, a molten alloy L is prepared in a melting device (not shown in the figures). The molten alloy L is supplied to the tundish 23, and further supplied from the tundish 23 to the cooling roll 22, whereby the molten alloy L is solidified to produce a cast alloy M. After that, the cast alloy M is displaced from the cooling roll 22, and passes through crushing rolls 21a, such that the cast alloy M is crushed into thin laminas N of the cast alloy.

The composition of the molten alloy L is represented, for example, by the general formula R-T-B. "R" represents mainly those in which a part of Nd is substituted with the other rare earth elements such as Pr, Dy and Tb, namely at least one of the rare earth elements including Y. "T" represents those in which a part of Fe is substituted with metals such as Co and Ni. "B" represents boron in which a part of boron can be substituted with C or N. In addition, Cu, Al, Ti, V, Cr, Ga, Mn, Nb, Ta, Mo, W, Ca, Sn, Zr, Hf, etc. may be added singularly or in combination as additional elements. The composition ratios of R and B are 28 to 33% and 0.9 to 1.3% by mass respectively, and the balance is T. A part of R may be substituted with 15% by mass of Dy and/or 15% by mass of Tb. However, the composition of the molten alloy applied to the production apparatus 1 of the present invention is not limited to the above-described range, and any composition for R-T-B type alloys can be applied.

It is preferable that the average cooling speed of the molten alloy on the cooling roll 22 be 300°C to 3000°C per second. When the cooling speed is 300°C per second or more, sufficient cooling speed can prevent the deposition of α-Fe, and can prevent organizations such as an R-rich phase and R₂T₁₇-phase from being coarse. When the cooling speed is 3000°C per second or less, its cooling rate does not grow excessive whereby the thin laminas of the cast alloy can be supplied to the heating device 3 at a proper temperature. Also, there is a merit that the thin laminas of the cast alloy are not excessively cooled, and therefore, it is unnecessary for them to be heated again. In addition, the average cooling speed can be calculated by dividing the difference between the temperatures of the molten alloy directly before touching the cooling roll and when separating from the cooling roll by the time that the molten alloy touches the cooling roll.

Furthermore, the average temperature of the cast alloy M when separating from the cooling roll will slightly vary depending on a slight change in the condition of touching the cooling roll 22, changes of the thickness, among others. For example, the surface of the alloy is scanned in the cross direction with a radiation thermometer from when casting begins to when casting ends whereby the average temperature of the cast alloy M when separating from the cooling roll can be calculated by averaging the measured values.

It is preferable that the average temperature of the cast alloy M when separating from the cooling roll 22 be lower by 100 to 500°C than the solidifying temperature of the molten alloy in the equilibrium state of the R₂T₁₄B-phase, and it is more preferably lower by 100 to 400°C. The melting temperature of the R₂T₁₄B-phase is around 1150°C in the ternary system of Nd-Fe-B. However, the melting temperature varies according to the substitution ofNd to the other rare earth elements, the substitution of Fe to the other transition elements, and types or amounts of the other additional elements. If the difference between the average temperature of the cast alloy M when separating from the cooling roll 22, and the solidifying temperature of the cast alloy M in the equilibrium state of the R₂T₁₄B-phase is less than 100°C, the cooling speed is insufficient. On the other hand, if the difference is over 500°C, the cooling speed is too fast, and the cooling of the molten alloy becomes excessive. The degree of such excessive cooling is not uniform inside the alloy, and it varies depending on the condition of touching the cooling roll, and the distance from the site contacting with the cooling roll.

Next, as shown in FIG 6, the crushed thin laminas N of the cast alloy pass through the hopper 7, and pile (mount) on the opening-closing stage 33A which is positioned directly under the outlet 7a of the hopper 7. During this time, the heater 31 is switched on, the thin laminas N of the cast alloy are kept at a predetermined temperature or heated by the heater 31 directly after they are piled on the opening-closing stage 33A.

The amount of the thin laminas N of the cast alloy piled on the opening-closing stage 33A may be properly adjusted according to the area of the stage plate 33a. However, the thin laminas N of the cast alloy are continuously supplied from the casting device 2, they will overflow from the opening-closing stage 33A in time although it also depends on the supplying speed.

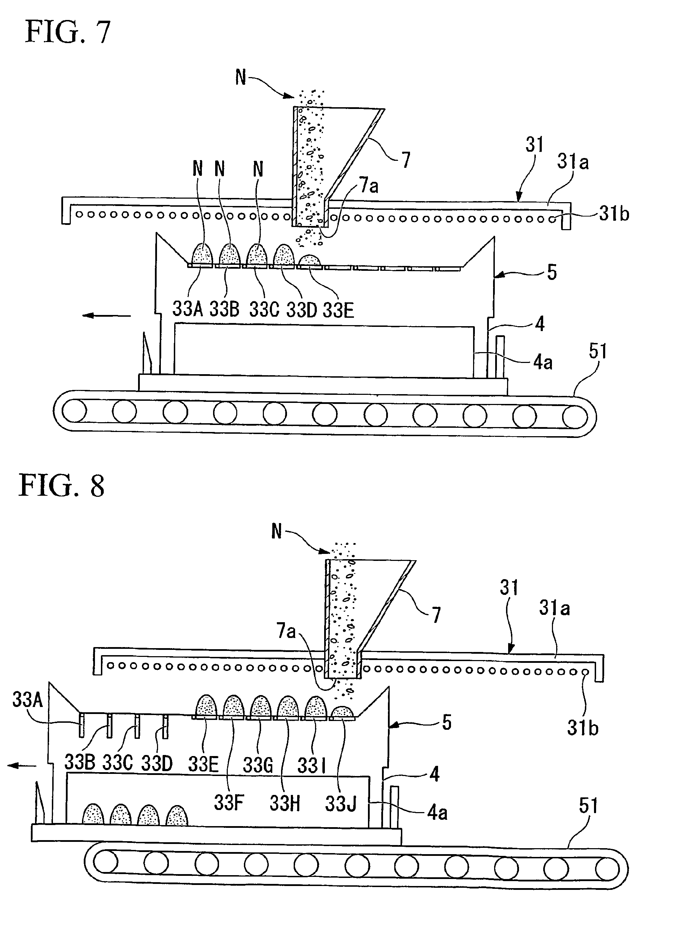

Therefore, in the production apparatus 1 of the present embodiment, the container 5 is moved to the left side hand as shown in FIG. 7 when the piling amount of the thin laminas N of the cast alloy reaches a predetermined value with respect to the opening-closing stage 33A Then, another opening-closing stage 33B next to the opening-closing stage 33A on the right side is positioned directly under the outlet 7a of the hopper 7, followed by the thin laminas N of the cast alloy being piled on the opening-closing stage 33B. After that, in the same way, the container 5 is moved in accordance with the preparation of the thin laminas N of the cast alloy, and the thin laminas N of the cast alloy are piled sequentially on the opening-closing stages 33C to 33E. Specifically, in the present invention, the preparation of the thin laminas N of the cast alloy refers to the supplying rate of the thin laminas N of the cast alloy thereto, or production rate thereof.

The piling amount of the thin laminas N of the cast alloy with respect to each of the opening-closing stages 33A to 33E may be monitored with their mass by providing each stage plate 33a with a mass-detecting system, or may be controlled by adjusting the piling period with respect to each stage plate 33a based on the production amount of the thin laminas N of the cast alloy per time that is calculated from the casting or crushing speed of the casting device 2.

During this time, the thin laminas N of the cast alloy piled on each of the opening-closing stages 33A to 33E are kept at a predetermined temperature or heated with the heater 31. It is preferable that the keeping temperature be lower than the temperature of the thin lamina N when separating from the cooling roll (separating temperature), and for example, it is preferably within a range of (the separating temperature - 100°C) to the separating temperature, and it is more preferably within a range of (the separating temperature - 50°C) to the separating temperature. More specifically, the keeping temperature is preferably within a range of 600°C to 900°C. Also, when the separating temperature declines for any reason, the thin laminas N of the cast alloy can be heated and kept at a predetermined temperature by setting the keeping temperature higher than the separating temperature. It is preferable that the heating range be within 100°C, and more preferably within 50°C. If the heating range is too large, the yield will decline.

Furthermore, the period of the temperature-keeping is preferably 30 seconds or more, more preferably 30 seconds to about several hours, and most preferably 30 seconds to 30 minutes. The coercive force of the R-T-B type alloy can be enhanced by way of subjecting the thin laminas N of the cast alloy to the temperature-keeping treatment. When the keeping temperature is 600°C or more, the coercive force can be sufficiently enhanced. Also, when the coercive force is 900°C or less, the deposition of α-Fe can be prevented, and the organizations such as the R-rich phase and the R₂T₁₇-phase can be prevented from being coarse. If the temperature-keeping time is 30 seconds or more, then the coercive force can be sufficiently enhanced. That is, the thin laminas of the cast alloy may be subjected to the temperature-keeping treatment for several hours, but the temperature-keeping time is preferably 30 minutes or less in terms of the yielding efficiency.

In addition, if they are kept at 1000°C, the coercive force can be improved. However, such a temperature makes organizations coarse. Furthermore, the particle distribution or the fluidity of the fine powder when they are finely crushed, and the sintering temperature may unfavorably change. When they are kept at 1000°C, it is required to consider its influence to subsequent processes.

Next, as shown in FIG. 8, the container 5 is further moved with respect to the rest of the opening-closing stages 33F to 33J in accordance with the preparation of the thin laminas N of the cast alloy in the same way whereby the thin laminas N of the cast alloy are successively piled on each of the opening-closing stages 33F to 33H.

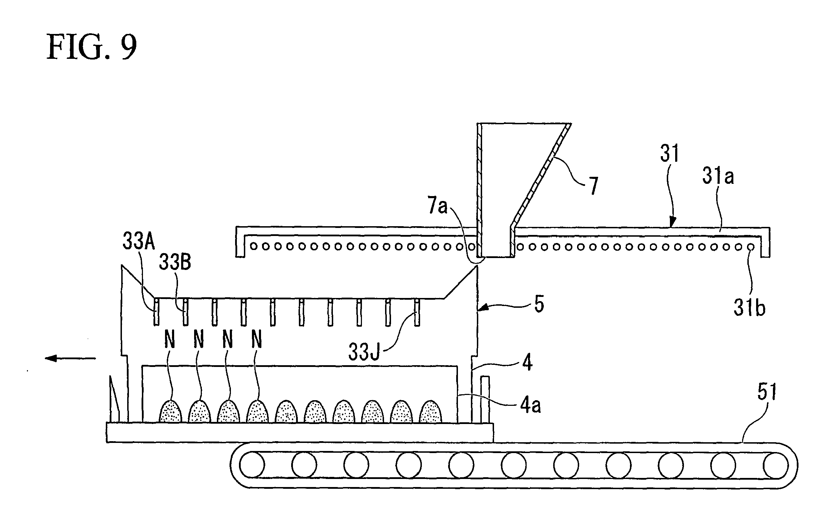

With regard to the thin laminas N of the cast alloy piled on the opening-closing stages 33A to 33E, they are successively dropped into the storage container 4 by making each opening-closing stage in an opened state as shown in FIG. 9 when the predetermined temperature-keeping time or heating time passes. Once the thin laminas N of the cast alloy are dropped into the storage container 4, the heat of the heater 31 no longer transmits to the thin laminas N of the cast alloy so that the temperature-keeping treatment is finished.

As described above by referring to FIG 7, thin laminas N of the cast alloy are successively mounted on each opening-closing stage, and the different opening-closing stages consequently have time-differences in the starting point to start the temperature-keeping treatment with respect to the thin laminas N of the cast alloy on the opening-closing stages. Therefore, it is preferable that the thin laminas N of the cast alloy are successively dropped into the storage container 4 by successively switching each opening-closing stage to in an opened state in order to fix the temperature-keeping time with respect to thin laminas N of the cast alloy on each opening-closing stage.

The thin laminas N of the cast alloy that dropped into the storage container 4 are in contact with the cooling plate 4a whereby the heat is absorbed into the cooling plate 4a, and the thin laminas N of the cast alloy are consequently cooled down.

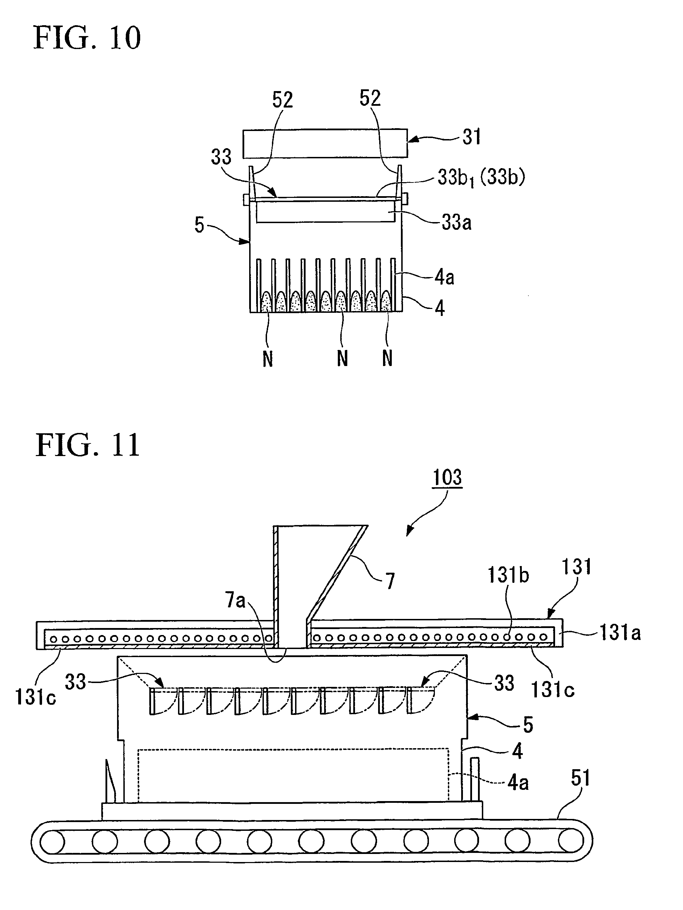

FIGS 9 and 10 show a state in which all opening-closing stages 33 are in an opened state, and the thin laminas N of the cast alloy are stored in the storage container 4.

If the casting and crushing processes by the casting device 2 are subsequently conducted after that, the container 5 can be moved to the right hand in the figures while all opening-closing stages 33 are made in a closed state, and the thin laminas N of the cast alloy are successively mounted on each opening-closing stage 33 in accordance with the preparation of the thin laminas N of the cast alloy.

To the contrary, if the casting and crushing processes by the casting device 2 are terminated, all opening-closing stages 33 are switched to in a closed state to prevent the heat of the heater 31 from reaching the storage container 4. Then, the gate 6e of the temperature-keeping storage chamber 6b is opened, and the container 5 is conveyed outside the chamber 6.

Also, if a cooling chamber is provided in the chamber, the gate 6e of the temperature-keeping storage chamber 6b is opened, the container 5 is conveyed to the cooling chamber, and the thin laminas N of the cast alloy inside the container 5 are allowed to stand in order to cool. When the cooling is completed, the gate of the cooling chamber is opened, and the container 5 may be carried outside the chamber 6.

As explained above, because the production apparatus 1 is equipped with the heating device 3 that keeps the thin laminas N of the cast alloy at a predetermined temperature or that heats them, the coercive force of the thin laminas N of the cast alloy made of the R-T-B type alloy can be improved whereby an R-T-B type magnet having excellent heat-resistance can be produced.

Also, the production apparatus 1 is equipped with the opening-closing stages 33 on which the thin laminas N of the cast alloy supplied from the casting device are mounted when they are in a closed state, and that drops the thin laminas N of the cast alloy into the storage container 4 when they are in an opened state; and the heater 31 that keeps the thin laminas N of the cast alloy mounted on the opening-closing stages 33 at a predetermined temperature or that heats them. This is why the temperature-keeping time for the thin laminas N of the cast alloy can be controlled by adjusting the opening or closing period of the opening-closing stages 33 without switching the heater 31 on or off, and this also results in miniaturization of the apparatus.

Also, according to the above production apparatus 1, the opening-closing stages 33 release the thin laminas N of the cast alloy to the storage container 4 when a predetermined temperature-keeping time passes after the thin laminas N of the alloy are mounted thereon whereby the coercive force of thin laminas N of the cast alloy can be greatly improved.

Also, according to the production apparatus 1, the heating device 3 is disposed below the casting device 2 whereby the thin laminas N of the cast alloy can be easily moved between two or three of the devices only by way of dropping them. Therefore, it is unnecessary to provide another system for delivering the thin laminas N of the cast alloy, and this can result in the miniaturization or space-saving for the production apparatus 1.

Also, according to the production apparatus 1, the storage container 4 and the opening-closing stages 33 are integrated to form the container 5 whereby the total thin laminas N of the cast alloy after the temperature-keeping treatment can be released to the storage container 4 without loss thereof. Also, because the storage container 4 and the opening-closing stages 33 are integrated to form one body, the miniaturization or space-saving for the production apparatus 1 can be achieved. Furthermore, the belt conveyor 51 which freely moves the container 5 is provided therein whereby the thin laminas N of the cast alloy after the temperature-keeping treatment can be quickly delivered out from the production apparatus 1.

Also, according to the production apparatus 1, the container 5 is equipped with a plurality of the opening-closing stages 33, and each opening-closing stage 33 is disposed along the moving-direction of the container 5 whereby thin laminas N of the cast alloy can be successively mounted on each opening-closing stage 33 by moving the container 5 even if thin laminas N of the cast alloy are continuously supplied from the casting device 2. Consequently, the thin laminas N of the cast alloy will not overflow from each opening-closing stage 33.

Also, according to the production apparatus 1, the thin laminas N of the cast alloy are successively released to the storage container 4 when a predetermined temperature-keeping time passes after the thin laminas N of the cast alloy are mounted on each opening-closing stage 33 whereby the temperature-keeping time can be fixed and the quality of the thin laminas N of the cast alloy can be consequently kept uniform.

Also, according to the production apparatus 1, the heater 31 is disposed between the casting device 2 and the opening-closing stages 33 along the moving direction of the container 5 whereby the distance between the thin laminas N of the cast alloy on each opening-closing stage 33 and the heater 31 can be fixed even while the container 5 moves. Consequently, the thin laminas N of the cast alloy can always be kept at a predetermined temperature in the same conditions.

Also, according to the production apparatus 1, the storage container 4 is equipped with the cooling plate 4a that cools the thin laminas N of the cast alloy whereby the thin laminas N of the cast alloy after the temperature-keeping treatment can be quickly cooled. Consequently, the temperature-keeping time will not be substantially extended, and the quality of the thin laminas N of the cast alloy can be improved.

Also, according to the production apparatus 1, the casting device 2 is equipped with the crushing device 21 whereby blocks of the cast alloy can be easily crushed into thin laminas N of the cast alloy, and this consequently makes it easier to treat the cast alloy in the heating device 3 or the storage container 4.

Also, according to the production apparatus 1, the hopper 7 that directs the thin laminas N of the cast alloy onto the opening-closing stages 33 is provided between the crushing device 21 and the opening-closing stages 33 whereby the thin laminas N of the cast alloy will not scatter inside the temperature-keeping storage chamber 6b, and the entire amount of the thin laminas N of the alloy can be delivered to the opening-closing stages 33 without loss thereof.

Also, according to the production apparatus 1, the heater 31 has the opening part 31 c, and the outlet 7a of the hopper 7 is disposed in the opening part 31 c whereby the outlet 7a of the hopper 7 faces the opening-closing stage 33 of the container 5, and the entire amount of the thin laminas N of the alloy can be therefore delivered to the opening-closing stages 33 without loss thereof as well as miniaturization and space-saving for the production apparatus 1 can be achieved.

Also, according to the production apparatus 1, the casting device 2 and the heating device 3 are provided inside the chamber 6 of an atmosphere of an inert gas whereby the R-T-B type alloy can be prevented from deteriorating.

Also, according to the production apparatus 1, a cooling chamber is provided inside the chamber 6, and the container 5 can be moved to the cooling chamber whereby the thin laminas N of the cast alloy stored in the container 5 that have already subjected to the temperature-keeping treatment can be delivered from the temperature-keeping storage chamber 5b, and they can be cooled. Consequently, the yield can be improved.

Also, according to the production apparatus 1, the rare earth element-containing alloy is an R-T-B type alloy whereby a magnet having high coercive force and excellent heat resistance can be produced.

The R-T-B type alloy is an alloy that mainly includes an element "R" where a part ofNd is substituted with the other rare earth elements such as Pr, Dy and Tb; an element "T" where a part of Fe is substituted with metals such as Co and Ni; and "B" (boron). The coercive force of the R-T-B type magnet formed of such an alloy generally increases as the composition ratios of Dy and Tb in the R-T-B type alloy increase, but the remanent magnetic flux density tends to decline on the contrary.

According to the production apparatus 1, the R-T-B type alloy can be subjected to the temperature-keeping treatment because the heating device 3 is provided therein whereby the coercive force of the magnet formed of the R-T-B type alloy can be improved. Consequently, the composition ratios of Dy and Tb in the alloy can be reduced. In addition, when the composition ratios of Dy and Tb in the alloy are reduced, the remanent magnetic flux density can also be improved.

The heating device is not limited to the above-described embodiment, and embodiments shown in FIGS 11 to 14 may be applied.

FIG 11 shows another embodiment for the heating device. The difference between a heating device 103 shown in FIG 11 and the heating device 3 shown in FIG 1 and FIGS 3 to 5 is that a heater 131 is equipped with a protective cover 131c.

That is, the heater 131 shown in FIG 11 includes a heater cover 131a; a main body 131b provided below the heater cover 131a; and the protective cover 131c that is attached to the heater cover 131 a to protect the main body 131b. The heater cover 131a is provided in order to release the heat generated from the main body 131b in the direction of the container 5 and in order to prevent the heat from the main body 131b from emitting to the casting chamber 6a. Also, the heater cover 131a can protect the main body 131b from breaking down even if a portion of the molten alloy or the cast alloy drops from the casting device 2 thereto.

Also, the protective cover 131c is disposed between the main body 131b and the container 5. When the thin laminas N of the cast alloy fall down to the opening-closing stages 33 of the container, the thin laminas N of the cast alloy may strike against the main body 131b because they rebound on the opening-closing stages 33. However, the protective cover 131 c can protect the main body 131 b from the thin laminas N of the cast alloy. In addition, the heater emitted from the main body 131 b is radiated onto the thin laminas N of the cast alloy on the opening-closing stages 33 through the protective cover 131c.

The protective cover 131 c may be a plate-shaped or mesh-like structure. If the protective cover 131c is plate-shaped, the use of a material that has excellent thermal conductivity and heat-radiation efficiency is preferable in order to sufficiently radiate the heat to the thin laminas N of the cast alloy. If it is mesh-like, it is preferable to use those which have pore sizes where the thin laminas N of the cast alloy cannot pass through the protective cover.

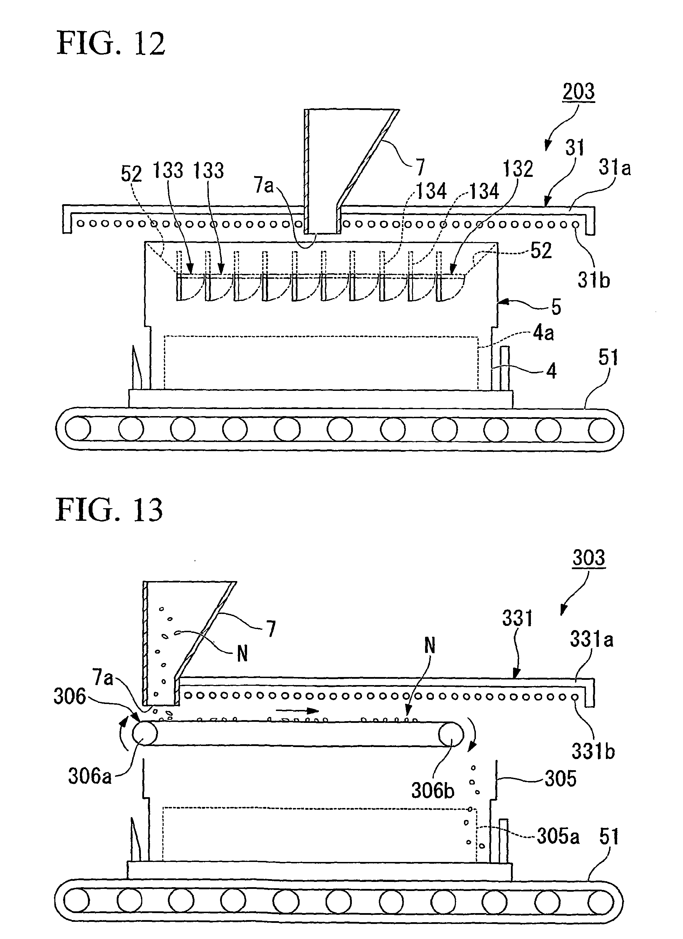

Next, FIG 12 shows yet another embodiment for the heating device. The difference between a heating device 203 shown in FIG. 12 and the heating device 3 shown in FIG. 1 and FIGS 3 to 5 is that partition panels 134 are provided between the opening-closing stages 133 of the opening-closing stage group 132.

That is, the opening-closing stage group 132 illustrated in FIG 12 has a plurality of the opening-closing stages 133, and the each opening-closing stage 133 is arranged along the moving-direction of the container 5. The opening-closing stage group 132 shown in FIG 12 has ten opening-closing stages 133. Also, guide members 52 are provided around the opening-closing stage group 132, and the guide members 52 prevent the thin laminas N of the cast alloy that has dropped through the hopper 7 from scattering into the temperature-keeping storage chamber 6b.

Moreover, the partition panels 134 are provided on the boundary of each opening-closing stage 133. Each partition panel 134 is set to stand facing the direction of the heater 31.

When the thin laminas N of the cast alloy fall down to the opening-closing stages 133, the thin laminas N of the cast alloy rebound on the opening-closing stage 133, and may scatter into adjacent opening-closing stages 133. However, the partition panel 134 can prevent the thin laminas N of the cast alloy from scattering.

Furthermore, the partition panel 134 can prevent the thin laminas N of the cast alloy from piling around a boundary part of the opening-closing stage 133, and the all thin laminas N can be dropped into the storage container 4 without leaving them thereon.

In addition, the partition panel 134 may include an auxiliary heater in order to assist temperature-keeping for the thin laminas N of the cast alloy on the opening-closing stage 133. The use of the auxiliary heater can uniformly keep the temperature of the thin laminas N of the cast alloy.

Next, FIG 13 illustrates yet another embodiment for the heating device. The difference between a heating device 303 shown in FIG 13 and the heating device 3 shown in FIG. 1 and FIGS 3 to 5 is that a belt conveyor 306 is provided between a heater 331 and a container 305 instead of the opening-closing stage group 132.

That is, the heating device 303 shown in FIG 13 includes the heater 331; the container 305; and the belt conveyor 306 provided between the heater 331 and the container 305. The belt conveyor 306 carries the thin laminas N of the cast alloy to the container 305 while keeping them at a predetermined temperature supplied from the casting device. Also, the container 305 is equipped with a cooling plate 305a.

The heater 331 includes a heater cover 331a and a main body 331b provided under the heater cover 331 a. The function, the material, etc. of the heater cover 331 a and the main body 331b are arranged in the same manner as the above-described heater 31.

Moreover, an outlet 7a of the hopper 7 is provided at the left side of the heater 331 whereby the thin laminas N of the cast alloy which have dropped from the casting device 2 through the hopper 7 can be delivered out to the belt conveyor 306.

Furthermore, the heater 331 is disposed along the longitudinal direction of the belt conveyor 306 at a regular distance from each other as shown in FIG 13. This configuration can achieve the uniform temperature-keeping of thin laminas N of the cast alloy that are conveyed by the belt conveyor 306.

In addition, in the heating device 303 shown in FIG. 13, another heater may be provided between the belt conveyor 306 and the container 305 in order to heat the belt of the belt conveyor 306.

Next, the belt conveyor 306 is disposed such that the end part 306a is arranged directly under the outlet 7a of the hopper 7 and the end part 306b is arranged directly over the container 305. The belt conveyor 306 extends from the end part 306a to the end part 306b along the heater 331. Also, the distance between the belt conveyor 306 and the heater 331 is almost fixed.

According to the above-described configuration, the thin laminas N of the cast alloy that has dropped from the casting device 2 through the hopper 7 can be subjected to the temperature-keeping by the heater 331 while being delivered by the belt conveyor 306. Then, the thin laminas N of the cast alloy can be released from the end part 306b of the belt conveyor 306 to the container 305. With regard to the temperature-keeping time, the starting point refers to when the thin laminas N of the cast alloy reach the belt conveyor 306, and the ending point refers to when they are sent from the end part 306b of the belt conveyor 306 to the container 305. Consequently, the temperature-keeping time can be adjusted by way of adjusting the driving speed of the belt conveyor 306.

Thus, according to the heating device 303 shown in FIG 13, the thin laminas N of the cast alloy that are continuously supplied can be kept at a predetermined temperature or heated, and the period for the temperature-keeping or heating can be fixed.

In addition, the container 305 is provided on another belt conveyor 51, and the container 305 can be moved to either the left or the right side hand of the figure. According to this structure, the relative position of the container 305 to the end part 306b of the belt conveyor 306 can be freely adjustable whereby the thin laminas N of the cast alloy can be prevented from piling at the same position of the container 305.

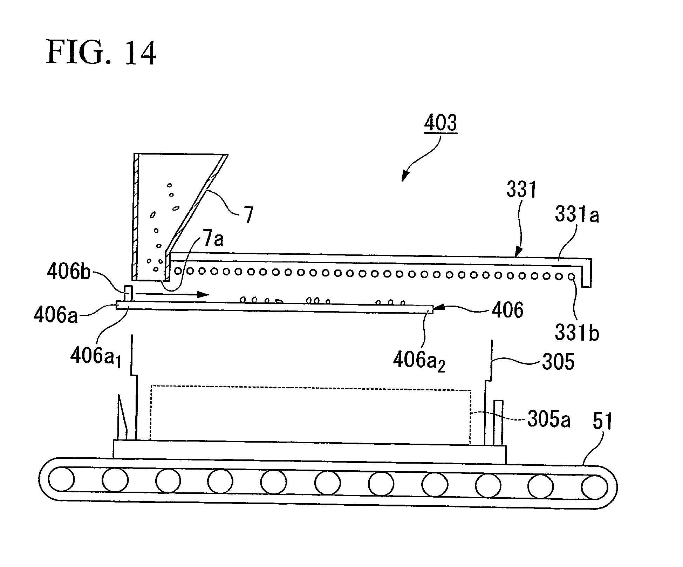

Next, FIG 14 shows yet another embodiment for the heating device. The difference between a heating device 403 shown in FIG 14 and the heating device 303 shown in FIG. 13 is that a pushing device 406 is disposed between a heater 331 and a container 305 instead of the belt conveyor 306.

That is, the heating device 403 includes a heater 331; a container 305; the pushing device 406 disposed between the heater 331 and the container 305. The pushing device 406 delivers the thin laminas N of the cast alloy, which are supplied from the casting device, to the container 305 while they are kept at a predetermined temperature. In addition, the container 305 is equipped with a cooling plate 305a.

A heater 331 includes a heater cover 331 a; a main body 331b provided under the heater cover 331 a. The function, material, etc. of the heater cover 331 a and the main body 331b are arranged in the same manner as the above-described heater 31.

Also, an outlet 7a of a hopper 7 is disposed at the left side of the heater 331 whereby the thin laminas N of the cast alloy that have been dropped the casting device 2 passing through the hopper 7 can be released to the pushing device 406.

Moreover, the heater 331, as shown in FIG 14, is disposed along the longitudinal direction of the pushing device 406. This configuration can achieve uniform temperature-keeping of the thin laminas N of the cast alloy that are conveyed by the pushing device 406.

In addition, in a heating device 403 shown in FIG. 14, another heater may be provided between a base plate 406a and the container 305 in order to heat the base plate 406a.

Next, the pushing device 406 includes the base plate 406a; and a pushing member 406b that slides on the base plate 406a. The base plate 406a is disposed such that the end part 406a₁ is arranged directly under the outlet 7a of the hopper 7 and another end part 406a₂ is arranged directly over the container 305. The base plate 406a extends from the end part 406a₁ to the end part 406a₂ along the heater 331. Also, the distance between the base plate 406a and the heater 331 is almost fixed. The pushing member 406b moves from the end part 406a₁ of the base plate 406a toward the end part 406a₂ while being in contact with the base plate 406a. To the contrary, the pushing member 406b moves back from the end part 406a₂ to the end part 406a₁ while separating from the base plate 406a.

According to the above-described configuration, the thin laminas N of the cast alloy that have been dropped from the casting device 2 passing from the hopper 7 are piled on the base plate 406a, and the thin laminas N of the cast alloy are kept at a predetermined temperature by the heater 331 while the pushing member 406b delivers them to the end part 406a₂ of the base plate by way of pushing. Then, the thin laminas N of the cast alloy are released from the end part 406a₂ of the base plate 406a to the container 305. With regard to the temperature-keeping time, the starting point refers to when the thin laminas N of the cast alloy reach the base plate 406a, and the ending point refers to when they are sent from the end part 406a₂ of the base plate 406a to the container 305. Consequently, the period for the temperature-keeping can be adjusted by way of controlling the driving speed of the pushing member 406b.

Thus, according to the heating device 403 shown in FIG. 14, the thin laminas N of the cast alloy that are continuously supplied can be kept at a predetermined temperature or heated, and the period for the temperature-keeping or heating can be fixed.

In the same manner as FIG. 13, the container 305 is provided on a belt conveyor 51, and the container 305 can move to either left or right side hand of the figure. According to this structure, the relative position of the container 305 to the end part 406a₂ of the base plate 406a of the pushing device 406 is freely adjustable whereby the thin laminas N of the cast alloy can be prevented from piling at the same position of the container 305.

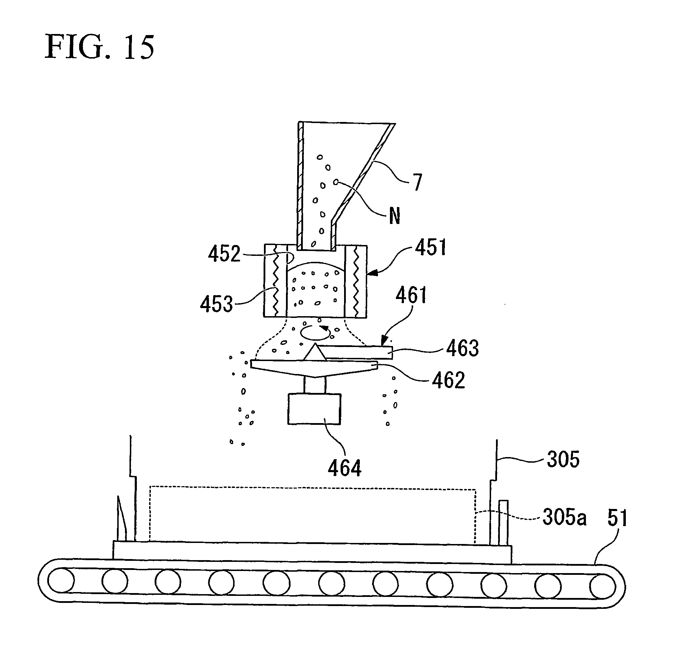

Next, FIG 15 further shows still another embodiment for the heating device. The difference between a heating device shown in FIG. 15 and the heating device 303 shown in FIG 13 is that a vertical furnace 451 and a table feeder are provided therein instead of the heater 331 and the belt conveyor 306.

The vertical furnace 451 shown in FIG 15 includes a thin lamina-path 452; an outside heater 453 provided in the circumference of the thin lamina-path 452. Also, a hopper 7 through which the thin laminas N of the cast alloy supplied from the casting device 2 is disposed on the entrance-side of the thin lamina-path 452. The table feeder 461 is disposed on the exit-side of the thin lamina-path 452. The container 305 is disposed under the table feeder 461. The table feeder 461 includes a table 462; a rotating blade 463 provided on the table 462; a driving member 464 disposed beneath the table 462 which rotates the rotating blade 463.

When the thin laminas N of the cast alloy are supplied to the above-described vertical furnace 451, the inside of the thin lamina-path 452 is filled with the thin laminas N of the cast alloy, and the thin laminas N of the cast alloy are successively pushed out from the thin lamina-path 452. The pushed out thin laminas N of the cast alloy are mounted on the table 462 of the table feeder 461, but they are further pushed out to the circumference of the table 462 when the rotating blade 463 rotates, and they are dropped into the container 305. The thin laminas N of the cast alloy are kept at a predetermined temperature or heated with the outside heater 453 while they pass through the thin lamina-path 452. The temperature-keeping time can be adjusted by controlling the balance between the supplying rate of the thin laminas N of the cast alloy to the vertical furnace 451, and the discharging rate of the thin laminas N of the cast alloy at the table feeder 461.

Thus, according to the heating device shown in FIG 15, the successively supplied thin laminas N of the cast alloy can be kept at a predetermined temperature or heated, and the period for the temperature-keeping or heating can be also fixed.

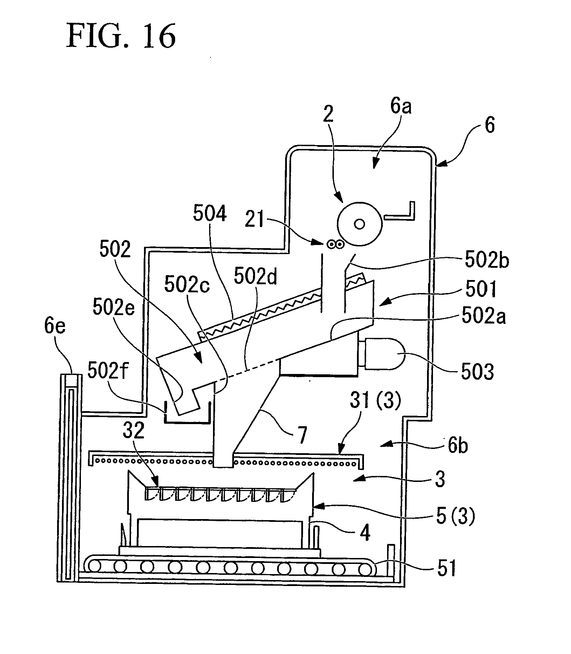

Next, another embodiment of the apparatus for producing an alloy is further described, wherein a vibrating feeder equipped with a heater is provided between a casting device and a heating device in order to uniformly keep the temperature of the thin laminas N of the cast alloy directly uniform after crushing. The structure is shown in FIG 16.

In the production apparatus shown in FIG 16, a vibrating feeder 501 equipped with a heater is disposed between the casting device and the heating device. In brief, the vibrating feeder 501 equipped with a heater includes a thin lamina-path 502 having an inclined plane 502a; a vibration-generating device 503 that vibrates the inclined plane 502a; and heater 504 disposed over the thin lamina-path 502.

A hopper 502b which is a path-way for the thin laminas of the cast alloy crushed by a crushing device 21 is disposed at the upstream of the thin lamina-path 502. Also, the inclined plane 502a has an outlet 502c at the downstream of the thin lamina-path 502, and a metal net 502d is attached to the outlet 502c. A retrieving outlet 502e is provided at the downstream from the outlet 502c to retrieve the thin laminas of the cast alloy having large particle sizes that could not pass through the metal net 502d, and a retrieving plate 502f is provided under the retrieving outlet 502e.

In addition, projections may be provided on the inclined plane 502a to entirely spread the sliding thin laminas of the cast alloy in the cross direction of the inclined plane 502a.

When the thin laminas of the cast alloy are supplied to the vibrating feeder 501 equipped with a heater, the thin laminas of the cast alloy slide off on the inclined plane 502a which is vibrated by the vibration-generating device 503. Then, the thin laminas of the cast alloy having small particles sizes pass through the metal net 502d, and drop from the hopper 7 into the heating device 3. On the other hand, the thin laminas of the cast alloy having large particle sizes further slide down onto the metal net 502d, and they are retrieved in the retrieving plate 502f from the retrieving outlet 502e. The thin laminas of the cast alloy are kept at a predetermined temperature or heated by the heater 504 while they slide down on the thin lamina-path 502. Accordingly, the temperature of the thin laminas of the cast alloy directly after crushing can be made uniform.

In addition, the present invention is limited to the above-described embodiment, and additions, omissions, substitutions, and other modifications can be made without departing from the spirit or scope of the present invention. For example, the configuration of the opening-closing stages 33 is not limited to the above-described embodiment. For example, the opening-closing stages 33 shown in FIG 11 may be applied.

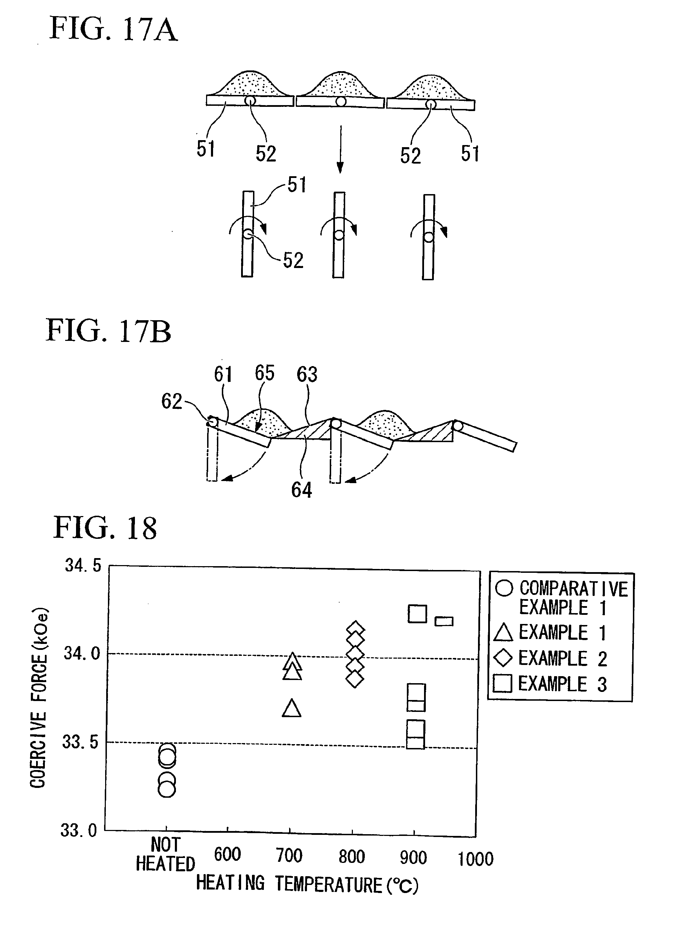

FIG. 17A shows an embodiment in which a rotating shaft 52 is provided at the center of a stage plate 51. In this embodiment, the motion of opening and closing can be achieved by rotating the rotating shaft 52 in one direction.

Also, FIG 17B shows another embodiment in which slightly inclined stage plates 61 having a rotating shaft 62 are provided, and a fixing member 64 having an inclined plane 63 is set to face the stage plate 61 to form an opening-closing stage. In this embodiment, the stage plate 61 is faced to the fixing member 64 to form a groove 65, the thin laminas of the cast alloy are piled in the groove 65, and therefore, thin laminas are prevented from scattering around.

As an example of a driving member for the container 5, a belt conveyor 51 is shown. However, for example, the container 5 may be equipped with a truck having wheels to form a vehicle-type container, and the truck may be designed to run on a railroad which is built in the apparatus.

Furthermore, the following embodiments can be applied instead of installing the cooling plate inside the container.

One example is a storage container wherein a stainless steel net is provided parallel to the bottom of the container so as to form a space between the stainless steel net and the bottom of the container, and an inert cooling gas is injected thereto. In this device, the thin laminas of the cast alloy can be cooled by injecting a cooling gas thereto directly after they are dropped and retrieved therein, and the cooling rate for the thin laminas of the cast alloy can be further modulated by adjusting the volume of the cooling gas injected thereto.

In the above-described example, they are cooled by way of the gas-phase cooling with a gas flowing between the piles. Therefore, if a large amount of the thin laminas of the cast alloy is piled, and the container is large, then the piles also tend to be large, and their cooling rate may be accidentally limited, or they may be ununiformly cooled depending on the position of the container.

Such problems may be solved by applying another example, wherein the inside of the storage container is partitioned with a plurality of hollow partition panels, a cooling medium flows inside the hollow partition panels, and the cooling rate of the thin laminas of the cast alloy can be sped up by way of the contact cooling between the hollow partition panels and the thin laminas of the cast alloy. According to this technique, the cooling medium does not have direct contact with the thin laminas of the cast alloy. Therefore, a gas such as air other than inert gases, or a liquid such as water can be used as a cooling medium.

Yet another embodiment can be mentioned. This embodiment utilizes the technique in which vents holes are made at the bottom parts of the above-described hollow partition panels, and a part of the inert gas that is injected into the panels is released from the vent holes to the inside of the storage container to cool the thin laminas of the cast alloy. In general, it is effective to cool the thin laminas of the cast alloy as rapidly as possible with regard to cooling after the organizations inside the alloy are solidified. In particular, such rapid cooling is preferable when casting is continuously conducted.

Another heater can be provided on the down side of the stage plate 33a of the opening-closing stage 33, and the stage plate 33a may be heated by this heater. This heater may be used in combination with the heater 31. In addition, this embodiment may be applied to the above-described heating device 103 or 203.

Also, a heat-insulated structure may be provided on the down side of the stage plate 33a of the opening-closing stage 33 in order to prevent the heat generated from the heater 31 from transmitting to the inside of the container 5. In this case, as examples of such a heat-insulated structure, blocks or fibrous boards made of ceramics such as alumina and zirconia may be disposed on the down side of the stage plate 33a, or a plurality of thin metal plates are piled on the down side of the stage plate 33a while having a space between them. With regard to the materials for the thin metal plate, those having a melting temperature lower than the temperature of the thin laminas of the cast alloy can be used, and iron or stainless steel, for example, may be used. In addition, this embodiment can be applied to the above-described heating device 103 or 203.

Also, a heater may be provided in hopper 7 to prevent the thin laminas of the cast alloy from being cooled.

Also, the production apparatuses of the present invention can be applied to produce a thermoelectric semiconductor alloy or hydrogen absorbing alloy other than R-T-B type alloy.

The thermoelectric semiconductor alloys, for example, include alloys represented by the general formula A₃₋ₓBₓC (wherein A and B represent at least one element of transition metals such as Fe, Co, Ni, Ti, V, Cr, Zr, Hf, Nb, Mo, Ta and W; and C represents at least one element of Group 13 or 14 such as Al, Ga, In, Si, Ge, and Sn).

Also, the thermoelectric semiconductor alloys can includes, for example, alloys represented by the general formula ABC (A and B represent at least one element of transition metals such as Fe, Co, Ni, Ti, V, Cr, Zr, Hf, Nb, Mo, Ta and W; and C represents at least one element of Group 13 or 14 such as Al, Ga, In, Si, Ge, and Sn).

Moreover, rare earth alloys represented by the general formula REₓ(Fe_{1-y}M_{y})₄Sb₁₂ (wherein RE represents at least one element of La and Ce; and M represents at least one element selected from the group consisting of Ti, Zr, Sn, and Pb where 0 < x ≤ 1 and 0 < y < 1) can be also mentioned.

Furthermore, rare earth alloys represented by the general formula REₓ(Co_{1-y}M_{y})₄Sb₁₂ (wherein RE represents at least one element of La and Ce; and M represents at least one element selected from the group consisting of Ti, Zr, Sn, Cu, Zn, Mn and Pb where 0 < x ≤ 1 and 0 < y < 1) can be also mentioned.

As examples of the hydrogen absorbing alloy, AB₂-type alloys (those using a base material of a transition element alloy such as Ti, Mn, Zr and Ni) or AB₅-type alloys (those using a base material of an alloy containing 5 parts of a catalytic transition element (Ni, Co, Al or the like) with respect to 1 part of a rare earth element, Nb, and/or Zr) can be mentioned.

### Examples

The material mixture of neodymium metal, dysprosium metal, ferroboron, cobalt, aluminum, copper, and iron (where the alloy composition ratio becomes 22% of Nd, 9.5% ofDy, 0.96% of B, 1.0% of Co, 10.15% ofAl, 0.10% of Cu, and the balance being Fe) was molten in the atmosphere of an argon gas at 1 atm pressure in the high-frequency melting furnace using an alumina crucible in order to prepare a molten alloy.

Then, this molten alloy was supplied to the casting device of the production apparatus shown in FIG. 1, this was cast by way of the SC method, and crushed to produce thin laminas of the cast alloy.

In addition, the diameter of the cooling roll was 600 mm, the material of the cooling roll was an alloy in which a small amount of Cr and Zr is mixed with copper. The inside of the cooling roll was water-cooled, and the circumferential speed of the roll was 1.3 m/s when casting. The average temperature of the cast alloy M when separating from the cooling roll was measured with a radiation thermometer, and it was found 890°C. Furthermore, with regards to the measured values, the difference between the maximum temperature and the minimum temperature was 35°C. The melting temperature of the R₂T₁₄B-phase of the produced alloy was about 1170°C. Therefore, the difference between the melting temperature and the average temperature was 280°C. In addition, the average cooling rate of the blocks of the cast alloy on the cooling roll was 980°C/second, and the average thickness was 0.29 mm.

The produced thin laminas of the cast alloy were allowed to pass through the hopper 7 of the production apparatus shown in FIG. 1, and they were piled on the opening-closing stages. Then, they were subjected to the temperature-keeping treatment where they were kept at 700°C to 900°C for one minute (700°C in Example 1; 800°C in Example 2; and 900°C in Example 3). In this way, thin laminas of the cast alloy formed by Examples 1 to 3 that were formed of the rare earth alloys were prepared.

On the other hand, thin laminas of the cast alloy of Comparative Example 1 were produced in the same manner as Examples 1 to 3 except that the temperature-keeping treatment was not conducted.

Then, each of thin laminas of the cast alloy was pressed with a molding machine in an atmosphere of 100% nitrogen and in the transverse magnetic field. The molding pressure was set 0.8 t / cm² and the magnetic field of 15 kOe was generated in the mold cavity. The obtained compact was kept in a vacuum of 1.33 × 10⁻⁵ hPa at 500°C for one hour, then kept in a vacuum of 1.33 × 10⁻⁵ hPa at 800°C for two hours, and further kept in a vacuum of 1.33 × 10⁻⁵ hPa at 1030°C for two hours whereby the compact was sintered. Their sintered densities ranged from 7.67 to 7.69 g/cm³ or more, and they had sufficient densities. These sintered products were further heated in an atmosphere of argon at 530°C for one hour whereby R-T-B type magnets of Examples 1 to 3 and Comparative Example 1 were produced.

The magnetic properties of the obtained R-T-B type magnets were measured with a pulse-type B-H curve tracer. The result is shown in FIG. 18. FIG 18 shows a relationship between the temperature for the temperature-keeping treatment, and the coercive force of the R-T-B type magnets with respect to Examples 1 to 3 and Comparative Examples 1.

As shown in FIG. 18, it was revealed that the coercive forces of the R-T-B type magnets of Examples 1 to 3 that were subjected to the temperature-keeping treatment were improved by about 3% with respect to Comparative Example 1 that was not subjected to the temperature-keeping treatment.

### INDUSTRIAL APPLICABILITY

According to the present invention, the apparatus for producing an alloy can produce an R-T-B type magnet having high coercive force as well as reducing the cost with regard to the material used therein. The produced R-T-B type magnets can be applied to industrial products such as hard disks, MRI apparatuses and motors. Furthermore, the production apparatus of the present invention can be applied to the production of a thermoelectric semiconductor alloy or hydrogen absorbing alloy other than the R-T-B type alloy. Therefore, the apparatus for producing an alloy of the present invention has high industrial applicability.

## Claims

1. An apparatus (1) for producing an alloy, comprising:
a casting device (2) which casts a molten alloy using the strip cast method;
a crushing device (21) which crushes the cast alloy after casting; and
a heating device (3) which keeps the thin laminas of the cast alloy after crushing at a predetermined temperature, or which heats the thin laminas of the cast alloy after crushing, wherein
the heating device (3) is equipped with a container (5) and a heater (31),
the container (5) is equipped with a storage container (4), and an opening-closing stage (32) disposed over the storage container (4);
the thin laminas of the cast alloy supplied from the crushing device (21) are mounted on the opening-closing stage (32) when the opening-closing stage (32) is in a closed state; and
the opening-closing stage (32) releases the thin lamina of the cast alloy to the storage container (4) when the opening-closing stage (32) is in an opened state.

2. The apparatus (1) for producing an alloy according to claim 1, wherein a hopper (7) and the heating device (3) are disposed below the crushing device (21).

3. The apparatus (1) for producing an alloy according to claim 2, wherein the heater (31) has an opening part, and an outlet of the hopper (7) is disposed in the opening part.

4. The apparatus (1) for producing an alloy according to claim 1, wherein the opening-closing stage (32) releases the thin laminas of the cast alloy to the storage container (4) after a predetermined period from the time when the thin laminas of the cast alloy are mounted on the opening-closing stage (32).

5. The apparatus (1) for producing an alloy according to claim 4, wherein the heater (31) keeps the thin laminas of the cast alloy mounted on the opening-closing stage (32) at a predetermined temperature, or the heater (31) heats the thin laminas of the cast alloy mounted on the opening-closing stage (32).

6. The apparatus (1) for producing an alloy according to claim 5, further comprising a driving device (51) which enables the container (5) to move freely.

7. The apparatus (1) for producing an alloy according to claim 6, wherein the container (5) is equipped with a plurality of the opening-closing stages (33), and the plurality of the opening-closing stages (33) is disposed along the moving direction of the container (5).

8. The apparatus (1) for producing an alloy according to claim 7, wherein the thin laminas of the cast alloy are sequentially mounted on each opening-closing stage (33) by moving the container in accordance with preparation of the thin laminas of the cast alloy.

9. The apparatus (1) for producing an alloy according to claim 7 or 8, wherein the opening-closing stages (33) sequentially release the thin laminas of the cast alloy to the storage container (4) after a predetermined period from the time when the thin laminas of the cast alloy are mounted on the opening-closing stages (33).

10. The apparatus (1) for producing an alloy according to claim 9, wherein the opening-closing stage (32) includes a stage plate (33a), and an opening-closing system which opens and closes the stage plate (33a) while the opening-closing system (33b) controls the inclining angle of the stage plate (33a); the opening-closing system (33b) mounts the thin laminas of the cast alloy on the stage plate (33a) by adjusting the stage plate at a horizontal position or an inclining position when the opening-closing stage (32) is in a close state; and the opening-closing system (33b) releases the thin laminas of the cast alloy to the storage container (4) by making the inclining angle of the stage plate (33a) larger when the opening-closing stage (33) is in an open state.

11. The apparatus (1) for producing an alloy according to claim 1, wherein the casting device (2), the crushing device (21) and the heater (31) are disposed inside a chamber (6) of an inert gas atmosphere.

12. The apparatus (1) for producing an alloy according to claim 1, wherein the alloy is a rare earth element-containing alloy comprising an R-T-B type alloy where R is at least one element of rare earth elements including Y; T is a metal which indispensably contains Fe; and B is boron.

## Patentansprüche

1. Apparat (1) zum Herstellen einer Legierung, welcher umfasst:
eine Gießvorrichtung (2), die eine geschmolzene Legierung unter Einsatz des Bandgießverfahrens gießt;
eine Zerkleinerungsvorrichtung (21), welche die gegossene Legierung nach dem Gießen zerkleinert; und
eine Heizvorrichtung (3), welche die dünnen Schichten der gegossenen Legierung nach dem Zerkleinern bei einer vorbestimmten Temperatur hält oder die dünnen Schichten der gegossenen Legierung nach dem Zerkleinern erwärmt, wobei
die Heizvorrichtung (3) mit einem Behälter (5) und einem Heizer (31) ausgestattet ist,
der Behälter (5) mit einem Aufbewahrungsbehälter (4) und einem über dem Aufbewahrungsbehälter (4) befindlichen Abschnitt (32) zum Öffnen und Schließen ausgestattet ist;
die dünnen Schichten der gegossenen Legierung, die von der Zerkleinerungsvorrichtung (21) aus zugeführt werden, auf dem Abschnitt (32) zu Öffnen und Schließen angebracht sind, wenn der Abschnitt (32) zum Öffnung und Schließen im geschlossenen Zustand ist; und
der Abschnitt (32) zum Öffnen und Schließen die dünnen Schichten der gegossenen Legierung zum Aufbewahrungsbehälter (4) hin freisetzt, wenn der Abschnitt (32) zum Öffnen und Schließen im geöffneten Zustand ist.

2. Apparat (1) zum Herstellen einer Legierung nach Anspruch 1, wobei ein Verteiler (7) und eine Heizvorrichtung (3) unter der Zerkleinerungsvorrichtung (21) angebracht sind.

3. Apparat (1) zum Herstellen einer Legierung nach Anspruch 2, wobei der Heizer (31) ein Öffnungsteil aufweist und ein Auslass des Verteilers (7) in dem Öffnungsteil angebracht ist.

4. Apparat (1) zum Herstellen einer Legierung nach Anspruch 1, wobei der Abschnitt (32) zum Öffnen und Schließen die dünnen Schichten der gegossenen Legierung nach einem vorbestimmten Zeitraum ab dem Zeitpunkt, wenn die dünnen Schichten der gegossenen Legierung auf dem Abschnitt (32) zum Öffnen und Schließen angebracht sind, zu dem Aufbewahrungsbehälter hin freisetzt.

5. Apparat (1) zum Herstellen einer Legierung nach Anspruch 4, wobei der Heizer (31) die dünnen Schichten der gegossenen Legierung, die auf dem Abschnitt (32) zum Öffnen und Schließen angebracht sind, bei einer vorbestimmten Temperatur hält oder der Heizer (31) die dünnen Schichten der gegossenen Legierung, die auf dem Abschnitt (32) zum Öffnen und Schließen angebracht sind, erwärmt.

6. Apparat (1) zum Herstellen einer Legierung nach Anspruch 5, der außerdem eine Antriebsvorrichtung (51) umfasst, welche ermöglicht, dass der Behälter (5) frei beweglich ist.

7. Apparat (1) zum Herstellen einer Legierung nach Anspruch 6, wobei der Behälter (5) mit einer Vielzahl von Abschnitten (33) zum Öffnen und Schließen ausgestattet ist und die Vielzahl der Abschnitte (33) zum Öffnen und Schließen entlang der Bewegungsrichtung des Behälters (5) angebracht sind.

8. Apparat (1) zum Herstellen einer Legierung nach Anspruch 7, wobei die dünnen Schichten der gegossenen Legierung nacheinander auf dem jeweiligen Abschnitt (33) zum Öffnen und Schließen angebracht sind, indem der Behälter gemäß der Herstellung der dünnen Schichten der gegossenen Legierung bewegt wird.

9. Apparat (1) zum Herstellen einer Legierung nach Anspruch 7 oder 8, wobei die Abschnitte (33) zum Öffnen und Schließen die dünnen Schichten der gegossenen Legierung zu dem Aufbewahrungsbehälter (4) hin nacheinander freisetzen, nachdem ein vorbestimmter Zeitraum ab dem Zeitpunkt, an dem die dünnen Schichten der gegossenen Legierung auf die Abschnitte (33) zum Öffnen und Schließen angebracht werden, abgelaufen ist.

10. Apparat (1) zum Herstellen einer Legierung nach Anspruch 9, wobei die Abschnitte (32) zum Öffnen und Schließen eine Abschnittsplatte (33a) und ein System zum Öffnen und Schließen umfasst, welches die Abschnittsplatte (33a) öffnet und schließt, während das System (33b) zum Öffnen und Schließen den Neigungswinkel der Abschnittsplatte (33a) kontrolliert; das System (33b) zum Öffnen und Schließen die dünnen Schichten der gegossenen Legierung auf der Abschnittslatte (33a) aufträgt, indem die Abschnittsplatte in einer horizontalen Position oder einer geneigten Position eingestellt ist, wenn der Abschnitt (32) zum Öffnen und Schließen im geschlossenen Zustand ist; und das System (33b) zum Öffnen und Schließen die dünnen Laminate der gegossenen Legierung zu dem Aufbewahrungsbehälter (4) hin freisetzt, indem der Neigungswinkel der Abschnittsplatte (33a) vergrößert wird, wenn der Abschnitt (33) zum Öffnen und Schließen im offenen Zustand ist.

11. Apparat (1) zum Herstellen einer Legierung nach Anspruch 1, wobei die Gießvorrichtung (2), die Zerkleinerungsvorrichtung (21) und der Heizer (31) im Inneren einer Kammer (6) mit einer Inertgasatmosphäre angebracht sind.

12. Apparat (1) zum Herstellen einer Legierung nach Anspruch 1, wobei die Legierung eine Seltenerdelement enthaltende Legierung ist, die eine Legierung vom R-T-B-Typ aufweist, wobei R mindestens ein Element eines Seltenerdelements, einschließlich Y, ist, T ein Metall ist, das unvermeidlich Fe enthält; und B Bor ist.

## Revendications

1. Appareil (1) pour la production d'un alliage, comportant :
un dispositif de coulée (2) qui coule un alliage fondu en utilisant le procédé de coulée en bande ;
un dispositif de broyage (21) qui broie l'alliage coulé après la coulée ; et
un dispositif de chauffage (3) qui garde les lames minces de l'alliage coulé après broyage à une température prédéterminée, ou qui chauffe les lames minces de l'alliage coulé après broyage, dans lequel
le dispositif de chauffage (3) est équipé d'un récipient (5) et d'un appareil de chauffage (31),
le récipient (5) est équipé d'un récipient de stockage (4), et d'un étage d'ouverture-fermeture (32) disposé au-dessus du récipient de stockage (4) ;
les lames minces de l'alliage coulé délivrées par le dispositif de broyage (21) sont montées sur l'étage d'ouverture-fermeture (32) quand l'étage d'ouverture-fermeture (32) est dans un état fermé ; et
l'étage d'ouverture-fermeture (32) libère la lame mince de l'alliage coulé dans le récipient de stockage (4) quand l'étage d'ouverture-fermeture (32) est dans un état ouvert.

2. Appareil (1) pour la production d'un alliage selon la revendication 1, dans lequel une trémie (7) et le dispositif de chauffage (3) sont disposés au-dessous du dispositif de broyage (21).

3. Appareil (1) pour la production d'un alliage selon la revendication 2, dans lequel l'appareil de chauffage (31) a une partie d'ouverture, et une sortie de la trémie (7) est disposée dans la partie d'ouverture.

4. Appareil (1) pour la production d'un alliage selon la revendication 1, dans lequel l'étage d'ouverture-fermeture (32) libère les lames minces de l'alliage coulé dans le récipient de stockage (4) après une période prédéterminée à partir du moment où les lames minces de l'alliage coulé sont montées sur l'étage d'ouverture-fermeture (32).

5. Appareil (1) pour la production d'un alliage selon la revendication 4, dans lequel l'appareil de chauffage (31) garde les lames minces de l'alliage coulé montées sur l'étage d'ouverture-fermeture (32) à une température prédéterminée, ou bien l'appareil de chauffage (31) chauffe les lames minces de l'alliage coulé montées sur l'étage d'ouverture-fermeture (32).

6. Appareil (1) pour la production d'un alliage selon la revendication 5, comportant en outre un dispositif d'entraînement (51) qui permet au récipient (5) de se déplacer librement.

7. Appareil (1) pour la production d'un alliage selon la revendication 6, dans lequel le récipient (5) est pourvu d'une pluralité d'étages d'ouverture-fermeture (33), et la pluralité d'étages d'ouverture-fermeture (33) est disposée le long de la direction de déplacement du récipient (5).

8. Appareil (1) pour la production d'un alliage selon la revendication 7, dans lequel les lames minces de l'alliage coulé sont montées de manière séquentielle sur chaque étage d'ouverture-fermeture (33) en déplaçant le récipient en fonction de la préparation des lames minces de l'alliage coulé.

9. Appareil (1) pour la production d'un alliage selon la revendication 7 ou 8, dans lequel les étages d'ouverture-fermeture (33) libèrent de manière séquentielle les lames minces de l'alliage coulé dans le récipient de stockage (4) après une période prédéterminée à partir du moment où les lames minces de l'alliage coulé sont montées sur les étages d'ouverture-fermeture (33).

10. Appareil (1) pour la production d'un alliage selon la revendication 9, dans lequel l'étage d'ouverture-fermeture (32) comprend une plaque d'étage (33a), et un système d'ouverture-fermeture qui ouvre et ferme la plaque d'étage (33a) tandis que le système d'ouverture-fermeture (33b) commande l'angle d'inclinaison de la plaque d'étage (33a) ; le système d'ouverture-fermeture (33b) monte les lames minces de l'alliage coulé de la plaque d'étage (33a) en ajustant la plaque d'étage dans une position horizontale ou dans une position d'inclinaison quand l'étage d'ouverture-fermeture (32) est dans un état fermé ; et le système d'ouverture-fermeture (33b) libère les lames minces de l'alliage coulé dans le récipient de stockage (4) en rendant l'angle d'inclinaison de la plaque d'étage (33a) plus grand quand l'étage d'ouverture-fermeture (33) est dans un état ouvert.

11. Appareil (1) pour la production d'un alliage selon la revendication 1, dans lequel le dispositif de coulée (2), le dispositif de broyage (21) et l'appareil de chauffage (31) sont disposés à l'intérieur d'une chambre (6) d'une atmosphère de gaz inerte.

12. Appareil (1) pour la production d'un alliage selon la revendication 1, dans lequel l'alliage est un alliage contenant un élément de terre rare comportant un alliage de type R-T-B où R est au moins un élément des éléments de terre rare comprenant Y ; T est un métal qui contient de manière indispensable Fe ; et B est du bore.
